# EUROPEAN PATENT APPLICATION

(11) **EP 1 657 850 A2**
(43) Date of publication of application: **17.05.2006**
(21) Application number: 05300409.9
(22) Date of filing: 25.05.2005
(51) Int. Cl.: H04L 12/24, H04L 29/14

(54) **Communication network management methods and systems**

(30) Priority: 27.05.2004 US 855115
(71) Applicant: Alcatel, 75008 Paris (FR)
(72) Inventor: Pirbhai, Rahim S., Ottawa, Ontario K2C 3N8 (CA); Landry, Felix M., Gatineau, Québec J9A 3K4 (CA); Chandra, Neeraj, Ottawa, Ontario K2C 3N8 (CA); Hennessy, Ryan Joseph, Ottawa, Ontario K2C 1E1 (CA)
(74) Representative: Hervouet, Sylvie

(57) **Abstract**

Methods and systems of managing communication networks are provided. Network management information received for an electronic device of a protection group, which includes a working electronic device and a protection electronic device in the communication network, is applied to both the working electronic device and the protection electronic device. Indications of the network management information, or portions of the network management information, may be displayed only for an active one of the working electronic device and the protection electronic device. In the event of an activity switch, such indications are displayed only for a newly active one of the working electronic device and the protection electronic device. In another embodiment, received network management information is applied to an active one of the working electronic device and the protection electronic device.

## Description

### Field of the Invention

This invention relates generally to communication networks and, in particular, to management of communication networks.

### Background

Failure to coordinate Operations Administration and Management (OAM) functions, such as port configuration and diagnostics for instance, between protection and working electronic devices of a protected group in a communication network can lead to service affecting conditions after a protection switch operation.

For example, if protection and working circuit cards in communication equipment have different port configurations on corresponding ports, e.g., cell relay on the port of the protection card and circuit emulation on the port of the working card, and an automatic protection switch (APS) transfers activity from the working card to the protection card, then the configuration from the working card must be copied to the protection card before service can be resumed on the newly active card.

Similarly, if a port whose traffic is causing congestion is disabled on the active card in order to investigate the cause of congestion and APS occurs before the problem is rectified, the traffic congestion will resume unless the corresponding port on the newly active card is disabled.

According to current management techniques, however, each electronic device of a protected pair is separately accessible and configurable through a network management system for OAM purposes. This could lead to inconsistencies between the protection and working devices, because OAM operations such as port configuration and diagnostics can be performed solely on one card of a protected pair, or differently on each. The separate interfaces may also allow an operator to inadvertently configure an inactive device instead of an active device, where the operator has not correctly identified the active device in a protection group.

### Summary of the Invention

Embodiments of the invention alleviate OAM-related configuration and diagnostics discrepancies between electronic devices of a protection group. One objective is to reduce problems that such discrepancies could cause after APS. Protection and working electronic devices are preferably configured in the same way, reflecting the unique aspects of their protection relationship, instead of allowing each device to be treated separately.

In one embodiment, this result is achieved by providing only one OAM interface to a protection group. The single interface may be associated with the working electronic device, for example, and network management information received through the interface may be applied to both the working electronic device and the protection electronic device. In another embodiment, network management information is received for one of the electronic devices in the protection group, a determination is made as to which device is active, and the received network management information is applied to the active device, to thereby avoid inadvertent configuration of an inactive device, for example.

Network management information which is meaningful for only an active electronic device may be applied to both electronic devices of a protection group, but is preferably displayed in a user interface only for the active electronic device. In this case, the status, either active or inactive, of the protection and working devices is determined, and the network management information is applied and displayed accordingly.

In one broad aspect, the invention provides a method of managing a communication network. The method includes receiving network management information for an electronic device of a protection group, the protection group comprising a working electronic device and a protection electronic device in the communication network, and applying the same received network management information to both the working electronic device and the protection electronic device.

The method may also include displaying representations of the working electronic device and the protection electronic device in a user interface. In this case, receiving may include receiving the network management information as a user input responsive to a user selection of the representation of the working electronic device. Where management operations are restricted to a working device interface, an error message may be displayed if a user selects the representation of the protection electronic device. Alternatively, a single representation of a protection group may provide the interface for managing the electronic devices of the protection group.

Applying network management information may include applying the information to objects stored in memory and associated with the working electronic device and the protection electronic device stored at a network management system, generating one or more network management commands based on the network management information and sending each network management command to a network element at which the protection group is implemented, or a combination thereof.

A system for managing a communication network, according to another aspect of the invention, includes an input device and a processor. The input device receives network management information for an electronic device of a protection group, and the processor is configured to receive the network management information from the input device, and to apply the same received network management information to both the working electronic device and the protection electronic device. The input device and the processor may be implemented at the same or different electronic equipment, such as a network management system and a network element at which the protection group is implemented.

A method of managing a communication network is also provided, and comprises receiving network management information for an electronic device of a protection group, the protection group comprising a working electronic device and a protection electronic device in the communication network, determining, after the network management information is received, to which one of the working electronic device and the protection electronic device the received network management information is to be applied, based on which one of the working electronic device and the protection electronic device is active, and applying the received network management information to the active one of the working electronic device and the protection electronic device.

Memory objects or records associated with the working electronic device and the protection electronic device may include an activity indication. The operation of determining may then be performed by accessing the activity indication in at least one of the objects associated with the working electronic device and the protection electronic device.

Representations of the working and protection electronic devices may be displayed in a user interface. The representation of the active electronic device may provide or be modified to provide an indication of the network management information. This indication may be moved to a newly active electronic device when an activity switch is detected.

Another aspect of the invention provides a system for managing electronic devices in a communication network, comprising an input device and a processor. The input device receives network management information for an electronic device of a protection group, and the processor is configured to receive the network management information from the input device, to determine, after the network management information is received, to which one of the working electronic device and the protection electronic device the received network management information is to be applied, based on which one of the working electronic device and the protection electronic device is active, and to apply the received network management information to the active one of the working electronic device and the protection electronic device.

According to a further aspect of the invention a method of providing a network management system user interface comprises displaying representations of a working electronic device and a protection electronic device of a protection group, displaying available network management functions responsive to a user selection of the representation of the working electronic device, and displaying an indication that network management functions are not available responsive to a user selection of the representation of the protection electronic device. Active device network management information may be displayed for only an active one of the working electronic device and the protection electronic device, whereas other network management information may be displayed for each of the working electronic device and the protection electronic device.

Other aspects and features of embodiments of the present invention will become apparent to those ordinarily skilled in the art upon review of the following description of specific illustrative embodiments of the invention.

### Brief Description of the Drawings

Examples of embodiments of the invention will now be described in greater detail with reference to the accompanying drawings, in which:
Fig. 1 is a block diagram of a communication network in which embodiments of the invention may be implemented;
Fig. 2 is a flow diagram of a method according to an embodiment of the invention;
Fig. 3 is a block diagram of a network management system according to an embodiment of the invention;
Fig. 4 is a flow diagram of a method according to a further embodiment of the invention;
Fig. 5 is a flow diagram of a method in accordance with another embodiment of the invention; and
Figs. 6-9 are display screens of an illustrative example graphical user interface (GUI) according to an embodiment of the invention.

### Detailed Description of Preferred Embodiments

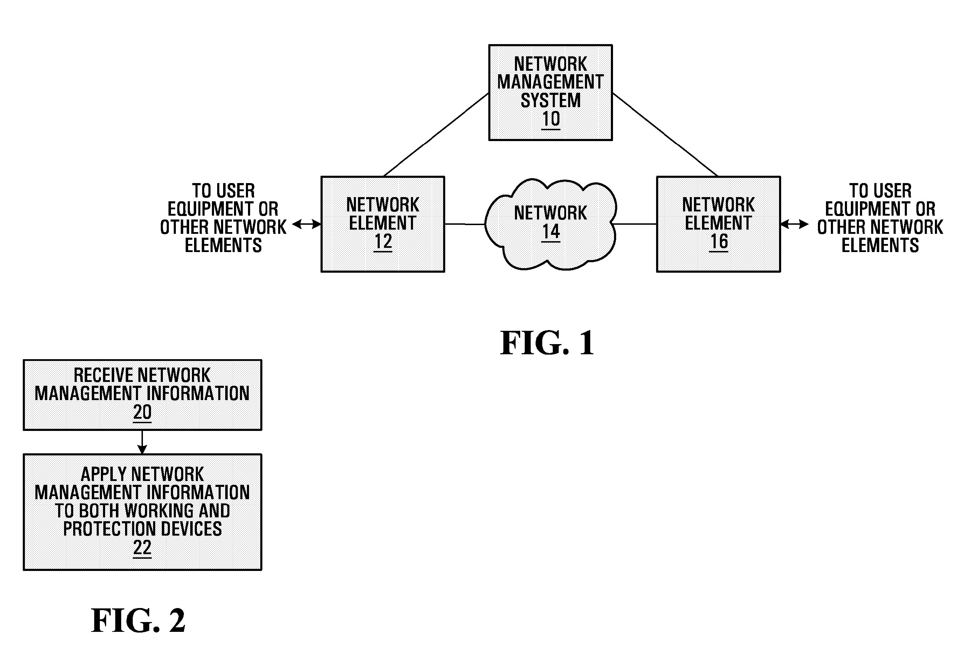

Fig. 1 is a block diagram of a communication network in which embodiments of the invention may be implemented. The communication network in Fig. 1 includes a network management system (NMS) 10, and network elements 12, 16 between which communication network connections through the network 14 may be established. The network elements 12, 16 may also be connected to end user equipment or other network elements.

Embodiments of the present invention are preferably implemented at the NMS 10, the network elements 12, 16, or possibly some combination thereof. Other equipment which may be provided within a communication network or operate in conjunction with a communication network, such as end user equipment and other user, management, or control equipment, has thus not been explicitly shown in Fig. 1 to avoid congestion. It should therefore be appreciated that the system of Fig. 1, as well as the contents of the other drawings, are intended solely for illustrative purposes. Embodiments of the present invention are in no way limited to any particular type of network, equipment, or communications, and may be implemented in conjunction with further, fewer, and different components than those explicitly shown.

The network elements 12, 16 may be switches, routers, or analogous elements through which communication network connections may be established. A communication network connection may be virtually any type of connection over which communication signals are exchanged. As those skilled in the art will appreciate, connections may include wired connections, wireless connections, or some combination thereof. Connections may be established, for example, for telephone calls and data communication sessions. The particular types of communication connections available in a communication network may be dependent upon the type of the network elements 12, 16 and the protocols used therein, the services offered by service providers using the network, the type of end user equipment for which the connections are established, for instance, and possibly other factors.

Each of the network elements 12, 16 includes one or more protection groups, each of which includes at least one working electronic device and at least one protection electronic device. A protection electronic device provides so-called redundancy protection for one or more normally active working electronic devices. An active electronic device is a preferred path for performing electronic device operating functions, such as traffic processing in communication equipment. In the event of a failure of a working electronic device, which is normally detected by the protection electronic device, activity is switched to the protection electronic device. APS is one mechanism for fault or detection and switching. Protection switching may be on a per-component basis, per-port for instance, or a per-electronic device basis for so-called equipment protection.

In a preferred embodiment, the electronic devices are circuit cards which support communication network services, although other types of electronic device are contemplated and may be apparent to those skilled in the art. An electronic device incorporates one or more components, such as interfaces or ports for instance, which are configurable through the NMS 10 and possibly an interface (not shown) at the network element 12, 16. References herein to electronic devices should therefore be interpreted accordingly to include various types of electronic device including one or more configurable components.

As described above, it may be desirable to apply network management information to both the working and protection electronic devices in a protection group to ensure that these electronic devices have corresponding configurations.

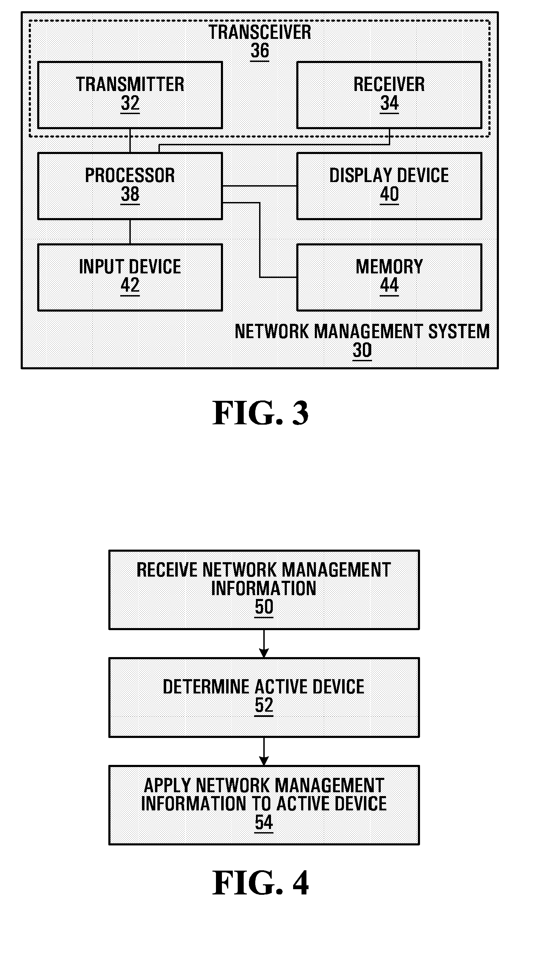

Fig. 2 is a flow diagram of a method according to an embodiment of the invention. The example method of managing a communication network as shown in Fig. 2 begins at 20, when network management information for an electronic device of a protection group is received. The same received network management information is then applied to both the working electronic device and the protection electronic device at 22. Thus, a user does not separately enter network management information for electronic devices in a protection group.

Network management information may include operating configuration information to control normal operation of an electronic device or a component thereof, such as a port or interface, or diagnostic configuration information associated with a diagnostic operation. Equipment loopback is one example of a diagnostic configuration. Other types of network management information for which propagation to multiple electronic devices of a protection group may be desirable are also contemplated and may be apparent to those skilled in the art.

The received network management information may be received, for example, as a user input. In one embodiment, a user interface is provided, at a network management system or a network element at which the protection group is implemented, for instance. Representations of the working electronic device and the protection electronic device are displayed in the user interface and may be selected by a user to invoke configuration, diagnostic, or other network management functions through which provide for network management information entry or selection.

In a preferred embodiment, selection of the representation of the working electronic device allows network management functions to be performed, through a menu for example, whereas selection of the representation of the protection electronic device causes an error message or a restricted menu to be displayed. Alternatively, a single representation of the protection group may be displayed in the user interface, such that selection of the protection group representation allows network management functions to be invoked, and subsequently received network management information is applied to both electronic devices in the protection group.

Representations of the working and protection devices may provide or be modified to provide indications of the network management information.

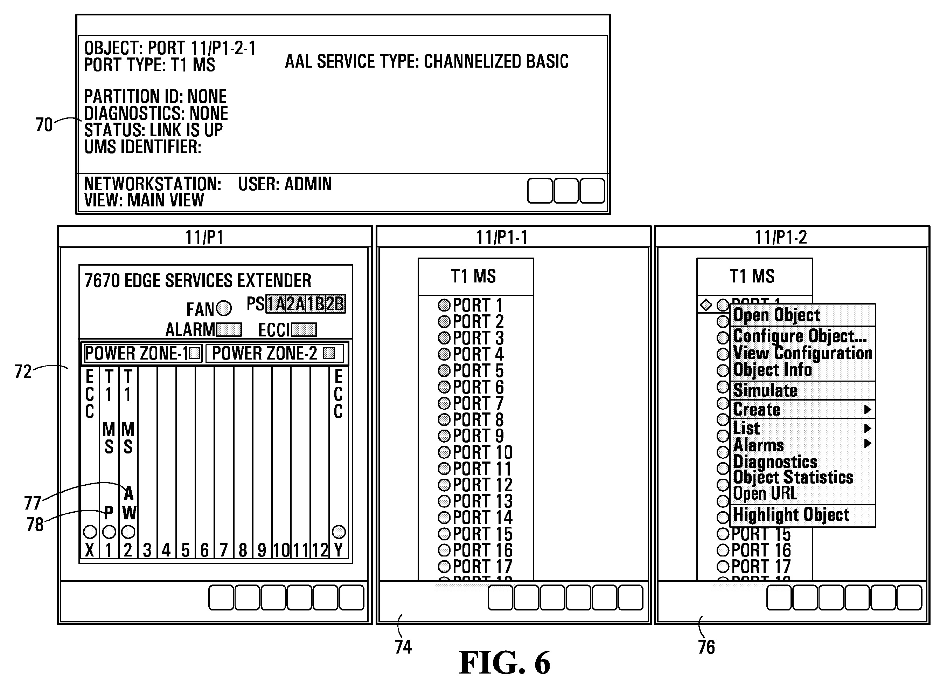

An illustrative example GUI according to an embodiment of the invention is described in further detail below with reference to Figs. 6-9.

Operations at 22 may include updating objects or records stored in a memory and associated with the working electronic device and the protection electronic device. Network management information may be written to the stored objects or records to reflect configuration of the working and protection devices and the components thereof, for example. These objects or records may be stored at a network management system, a network element at which the protection group is implemented, or both. In this manner, information relating to both working and protection electronic devices is kept current and may be synchronized at multiple locations.

Applying network management information at 22 may also or instead involve generating a network management command based on the network management information and sending the network management command to a network element at which the protection group is implemented. The network element may then process the command to apply the network management information to both the working and protection electronic devices. In another embodiment, respective network management commands are generated for the working electronic device and the protection electronic device based on the network management information and sent to the network element. This scheme may be particularly preferred where the network element provides separate interfaces for managing the working and protection electronic devices and an NMS or other remote system provides for a single management interface according to an embodiment of the invention.

Fig. 3 is a block diagram of an NMS according to an embodiment of the invention. The NMS 30 includes a processor 38 connected to a display device 40, an input device 42, a memory 44, a transmitter 32, and a receiver 34 in a transceiver 36, and is an illustrative example of the NMS 10 of Fig. 1. The transmitter 32 and the receiver 34 in the transceiver 36 enable communications with network elements in a communication network, through communication network control channels, for example.

The processor 38 may include one or more processing devices such as a microprocessor, a digital signal processor, an application specific integrated circuit (ASIC), a microcontroller, electronic circuitry, or other components configured to perform various functions. In one embodiment, the processor 38 includes a microprocessor which executes instructions stored in the memory 44. Although the processor 38 is configured to perform operations associated with communication network management in accordance with embodiments of the invention, other additional features and functions may also be provided by the processor 38. Thus, the processor 38 need not necessarily be a dedicated processor.

The display device 40 includes a display screen on which at least a user interface may be displayed. Virtually any type of display device may be used as the display device 40, as the invention is in no way limited to any particular display device type or functionality. In one embodiment, the display device 40 incorporates a touch screen to thereby provide both display and input capabilities.

The input device 42 may include a keyboard, a mouse, and other input/output devices for receiving inputs from or providing outputs to a user. The input device 42 may also include a communication interface or port for receiving network management information from a remote system or device. Although shown as a separate block in Fig. 3, it should be appreciated that network management information may also be received through the receiver 34 in some embodiments. Thus, the input device 42 may include input devices for receiving user inputs entered at the NMS 30 or at a network element 12, 16, or information from other remote systems or devices, through the communication network or another medium. It should therefore be apparent that embodiments of the invention may process network management information from various sources, including local sources in the case of an operator entering commands or information at an NMS for instance, and remote sources where commands or information are entered by an operator through a user interface at a network element and transmitted to an NMS, for example.

The memory 44 may similarly include multiple memory devices. For example, processors may interact with solid state memory devices, including both volatile and non-volatile memory devices, and other types of memory device, such as hard disk drives and memory devices with removable storage media.

Many different types of transceiver may be suitable for use as the transceiver 36. The particular type and structure of the transceiver 36 is dependent upon the communication network in which the NMS 30 is implemented. It should also be appreciated that an NMS need not necessarily include both a transmitter 32 and a receiver 34.

According to an embodiment of the invention, the input device 42 receives network management information for an electronic device of a protection group, and the processor 38 is configured to perform the network management operations described above. Thus, the processor is configured to receive the network management information from the input device 42, and to apply the same received network management information to both the working electronic device and the protection electronic device of the protection group.

The processor 38 may also display on the display device 40 representations of the working electronic device and the protection electronic device. User input of the network management information may be enabled by selection of a displayed device representation, or a protection group representation, for example, as described above.

Received network management information may be used by the processor 38 to update objects stored in the memory 44 and associated with the working electronic device and the protection electronic device.

In one embodiment, the processor 38 generates a network management command or respective working and protection device commands based on the network management information and sends each network management command through the transmitter 32 to a network element at which the protection group is implemented. In the case of a single command, the network element applies the command to both the working and protection devices. Thus, the functionality described herein may be provided at an NMS, at a network element, or at both an NMS and a network element.

The network element may provide a confirmation that the network management command has been processed, which is received through the receiver 34. The network management information may then be further used to update objects in the memory 44 responsive to the confirmation.

Separate management interfaces for working and protection devices according to known techniques may also allow an operator to inadvertently configure a working device which is no longer active, for example. Configuration commands for a working device would be processed at a network element to configured the working device, despite the fact that the working device is no longer active. This may occur, for example, when an operator does not correctly identify a protection device as being active, and results in desired configurations not taking effect on an electronic device which is actually in operation.

Fig. 4 is a flow diagram of a method according to a further embodiment of the invention which addresses this problem. The method of managing a communication network as shown in Fig. 4 begins at 50 when network management information for an electronic device of a protection group is received. At 52, after the network management information is received at 50, a determination is made as to which of the working electronic device and the protection electronic device in the protection group is active. The received network management information is then applied to the active electronic device at 54.

In another embodiment, the determination at 52 involves determining to which one of the working electronic device and the protection electronic device the received network management information is to be applied, based on a previous determination as to which one of the working electronic device and the protection electronic device is active. Thus, the activity determination may be made when the network management information is received or at some time before the network management information is received. These determinations may also be made by different system components.

The operations of receiving at 50 may be substantially as described above. Applying at 54 may similarly include the above operations of updating memory objects or generating configuration commands, for example. Where objects stored in a memory and associated with the working electronic device and the protection electronic device comprise an activity indication, determining at 52 may include accessing the activity indication in at least one of the objects associated with the working electronic device and the protection electronic device. The activity indication, illustratively a flag, may be provided in only an active or an inactive device object, such that an activity state may be inferred by accessing only one of the objects. An explicit indication may instead be provided in both objects.

A system for managing electronic devices as shown in Fig. 4 may have substantially the same structure as shown in Fig. 3 and described above. In this embodiment, the input device 42 receives network management information for an electronic device of a protection group, which may be either a working electronic device or the protection electronic device but is preferably the working electronic device. The processor 38 is configured to receive the network management information from the input device, to determine, after the network management information is received, to which one of the working electronic device and the protection electronic device the received network management information is to be applied, based on which one of the working electronic device and the protection electronic device is active, and to apply the received network management information to the active one of the working electronic device and the protection electronic device.

Embodiments of the invention which determine an active electronic device and apply network management information to the active device are particularly suited to protection groups, including 1:N protection groups for instance, in which a protection device protects more than one working device. Network management information for a working electronic device which is no longer active is automatically applied to the protection device.

A further embodiment of the invention provides for display of network management information for only active electronic devices. As described above, network management information may be applied to both working and protection electronic devices. However, some network management information, which affects diagnostic configurations for diagnostic operations, for example, may have meaning or effect only for an active electronic device. Therefore, in accordance with an embodiment of the invention, an indication of some network management information, or related electronic device status or configuration, may be displayed only for an active device and switched to a newly active device upon detecting an activity switch.

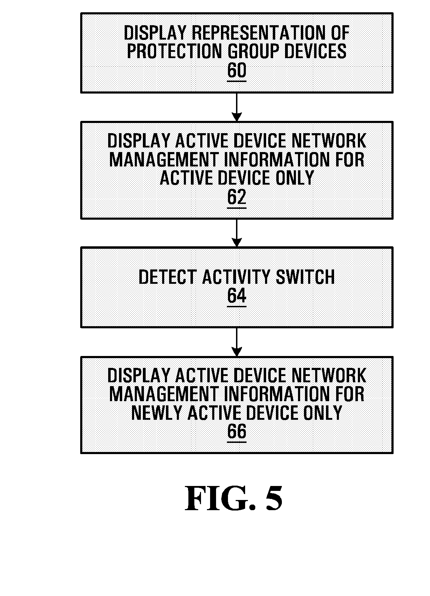

Fig. 5 is a flow diagram of a method of displaying network management information for a communication network in accordance with another embodiment of the invention. The method begins at 60 wherein representations of a working electronic device and a protection electronic device in a protection group are displayed. Network management information which has a meaning or effect for only an active one of the working electronic device and the protection electronic device, referred to in Fig. 5 as active device network management information, is displayed at 62 for only the active device. At 64, an activity switch from the active one of the working electronic device and the protection electronic device to a newly active one of the working electronic device and the protection device is detected, and at 66, the active device network management information is displayed for only the newly active one of the working electronic device and the protection electronic device responsive to the activity switch.

The detection at 64 may be based on receipt of an activity switch notification from a network element at which the protection group is implemented, or alternatively by querying a network element at which the protection group is implemented.

A system for displaying network management information for a communication network as shown in Fig. 5 may be substantially similar to the system of Fig. 3, with the processor 38 being configured to display on the display device 40 a representation of a working electronic device and a protection electronic device in a protection group, to display active device network management information for only an active one of the working electronic device and the protection electronic device, to detect an activity switch from the active one of the working electronic device and the protection electronic device to a newly active one of the working electronic device and the protection device, and to display the active device network management information for only the newly active one of the working electronic device and the protection electronic device responsive to the activity switch.

The processor 38 may implement or interact with a display controller and an activity switch detector to perform displaying and detecting operations.

Figs. 6-9 are display screens of an illustrative example GUI according to an embodiment of the invention. It should be appreciated that the particular elements, layout, functions, indicators, etc., shown in Figs. 6-9 are solely for illustrative purposes and that the invention is in no way limited thereto.

The screen of Fig. 6 includes an information element 70 which provides an indication of a currently selected electronic device or component thereof. In the example shown, the element 70 indicates which one of multiple ports (port 1) on a circuit card in a second slot of a network element is selected, and displays information relating to that port. Functional buttons may also be provided and have been shown in outline in Fig. 6.

The elements 72, 74, 76 provide representations of a network element and electronic devices implemented at the network element.

The indicators P and W at 77 indicate a protection card and a working card, respectively of a protection group. Once established, protection and working designations to be fixed and are not typically changed. Although Fig. 6 includes explicit indicators for the working and protection cards, it should be appreciated that indications of only one designation may be provided in other embodiments. In the absence of a protection card designation, for example, it would be assumed that a card is a working card.

The indicator at 77, on the other hand, indicates which one of the working and protection electronic devices is active, that is, performing normal electronic device operations. In a communication switch, for example, the working card is the card which is currently passing or processing communication traffic.

Card activity, unlike the protection/working designation, is dynamic. Activity switches may be made from a working card to a protection card, for example, upon a failure of a working card, and the protection card is then active. If proper operation of the working card is subsequently restored, then activity may be switched back to the working card. In the example shown in Fig. 6, the card in port 2 is a working card and is currently active.

As indicated by the diamond symbol in the element 76, selection of port 1 in a representation of the working card in slot 2, using a mouse for example, displays a menu of network management functions which are available for that card and port. As this card is the working card, all functions are preferably available in the illustrated embodiment. Selection of a function then allows an operator to input or generate network management information, and in the illustrated example, to review configuration and status information.

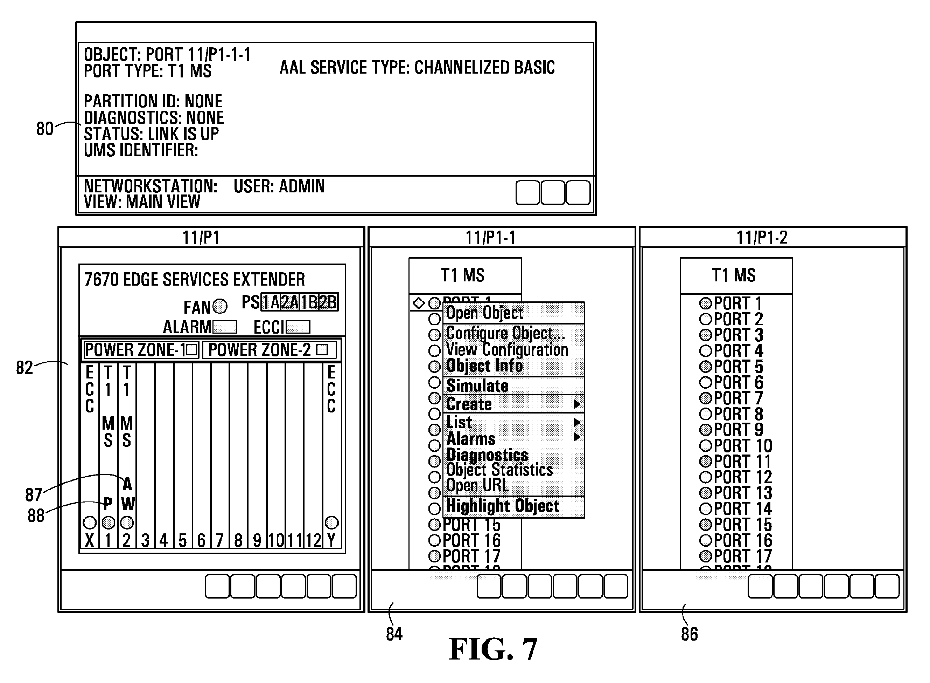

Referring now to Fig. 7, which includes similar elements 80, 82, 84, 86, 87, 88, it will be apparent that the menu displayed responsive to selection of port 1 in the representation of the protection card in slot 1 includes items in bold and regular text. The absence of the bold text attribute thereby provides an indication that at least some network management functions are not available. Other types of indicators, including an error message for example, may also be provided. As shown in Fig. 7, although information associated with the protection card may be accessed through the menu, configuration functions are displayed in non-bolded text, indicating that they are not available. It is also possible that sub-menus may include available and unavailable functions. For example, selection of the diagnostics menu item at 84 may provide a sub-menu including display and configure functions, with the configure function preferably being unavailable.

The example of Figs. 6-7 provides separate representations of the protection and working cards. A single representation, in the element 72, 82 for instance, may instead be provided for invoking network management functions. Depending on the function invoked or the network management information received, a determination may then be made, at a system at which the GUI is provided or a network element at which the protection group is implemented, for example, as to how the network management information is to be applied.

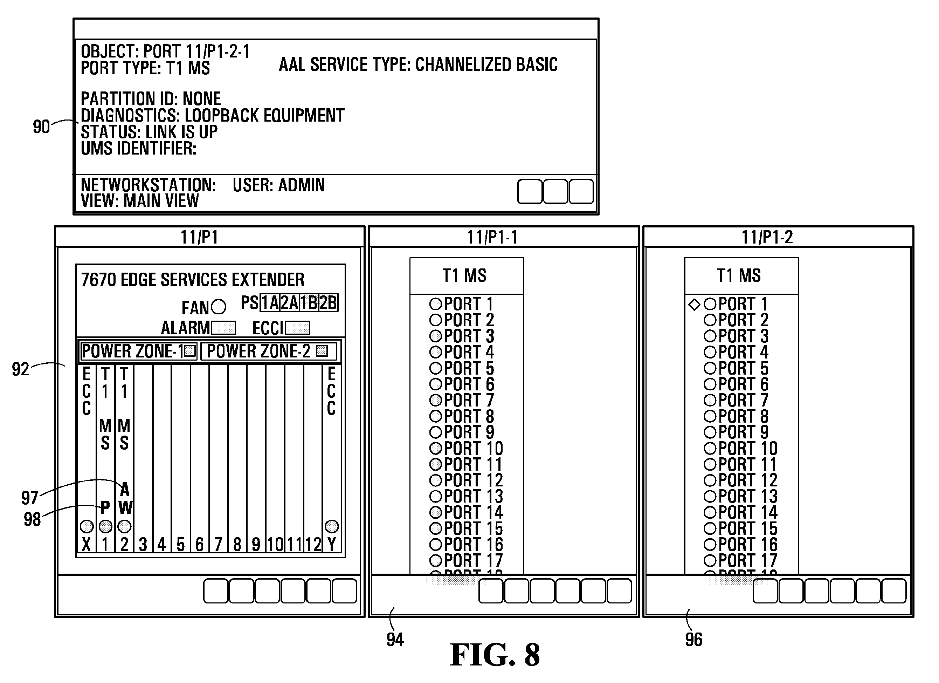

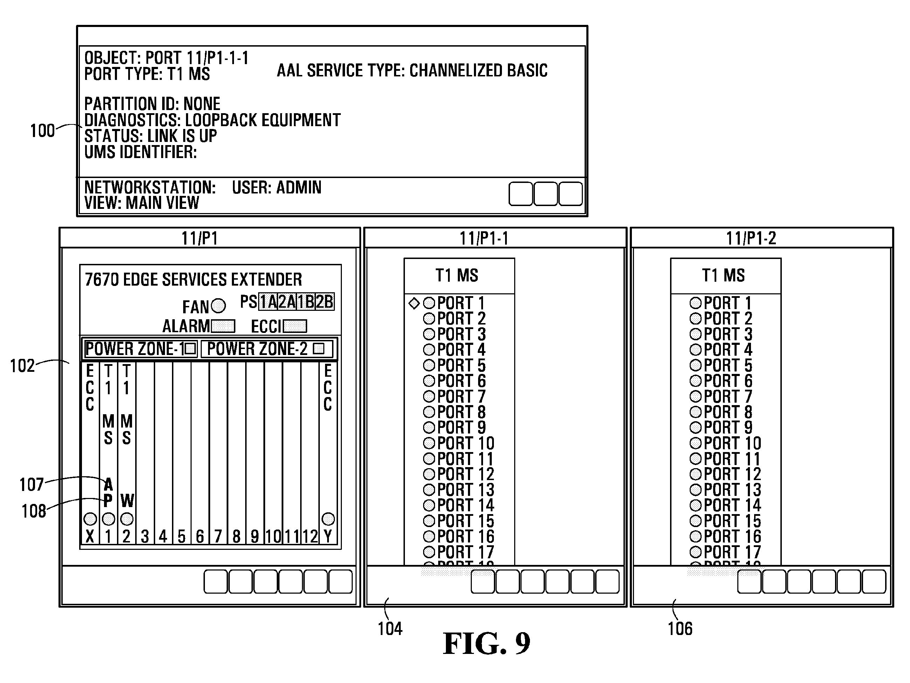

Active device network management information which has a meaning or effect for only an active card is preferably displayed for only that card. As shown in Figs. 8 and 9, which include elements 90/100, 92/102, 94/104, 96/106, 97/107, 98/108 similar to those described above, a "loopback equipment" diagnostic configuration is displayed at 90 for the active card in slot 2. After a protection switch, the loopback equipment diagnostic is instead displayed only for the newly active card in slot 1. The active card indication is also moved to the newly active card in slot 1, as shown at 107.

Embodiments of the invention may thereby simplify operator interfaces and operations, reduce the possibility of errors arising after an APS, and effectively eliminate the possibility of configuration discrepancies between protection and working devices, which could affect service after an APS.

What has been described is merely illustrative of the application of the principles of the invention. Other arrangements and methods can be implemented by those skilled in the art without departing from the scope of the present invention.

For example, although Fig. 3 is labelled as an NMS, embodiments the invention may also be implemented partially or fully in a network element at which a protection group is implemented. A network element may have a substantially similar general structure and be configured to operate as described above to process and display network management information. Specific implementations of a network element and an NMS may differ, however, as these systems normally support different functions. For instance, a network element would normally include some sort of local interface to electronic devices, whereas electronic devices are not typically implemented at an NMS, which thus would not normally include such an interface.

In addition, although described primarily in the context of methods and systems, other implementations of the invention are also contemplated, as instructions stored on a computer-readable medium for example.

## Claims

1. A method of managing a communication network, comprising:
receiving network management information for an electronic device of a protection group, the protection group comprising a working electronic device and a protection electronic device in the communication network; and
applying the same received network management information to both the working electronic device and the protection electronic device.

2. The method of claim 1, further comprising:
displaying representations of the working electronic device and the protection electronic device in a user interface,
wherein receiving comprises receiving the network management information as a user input responsive to a user selection of the representation of the working electronic device.

3. The method of claim 2, further comprising:
displaying an error message responsive to a user selection of the representation of the protection electronic device.

4. The method of claim 1, further comprising:
displaying a representation of the protection group in a user interface,
wherein receiving comprises receiving the network management information as a user input responsive to a user selection of the representation of the protection group.

5. The method of any one of claims 1 to 4, wherein applying comprises applying the network management information to objects associated with the working electronic device and the protection electronic device stored in a memory.

6. The method of any one of claims 1 to 4, wherein applying comprises generating a network management command based on the network management information and sending the network management command to a network element at which the protection group is implemented.

7. The method of any one of claims 1 to 4, wherein applying comprises generating respective network management commands for the working electronic device and the protection electronic device based on the network management information and sending the network management commands to a network element at which the protection group is implemented.

8. The method of claim 2, further comprising:
modifying the representations of the working electronic device and the protection electronic device to provide indications of the network management information.

9. The method of any one of claims 1 to 8, wherein the network management information comprises configuration information for configuring the working electronic device.

10. The method of claim 1, further comprising:
displaying representations of the working electronic device and the protection electronic device; and
displaying active device network management information for only an active one of the working electronic device and the protection electronic device.

11. The method of claim 10, further comprising:
detecting an activity switch from the active one of the working electronic device and the protection electronic device to a newly active one of the working electronic device and the protection device; and
displaying the active device network management information for only the newly active one of the working electronic device and the protection electronic device responsive to the activity switch.

12. The method of claim 11, wherein detecting comprises one of: receiving an activity switch notification from a network element at which the protection group is implemented and querying a network element at which the protection group is implemented.

13. The method of any one of claims 10 to 12, wherein the active device network management information comprises diagnostic configuration information indicating a configuration of the active electronic device for a diagnostic operation.

14. A computer-readable medium comprising instructions which when executed perform the method of any one of claims 1 to 13.

15. A system for managing a communication network, comprising:
an input device for receiving network management information for an electronic device of a protection group, the protection group comprising a working electronic device and a protection electronic device in the communication network; and
a processor configured to receive the network management information from the input device, and to apply the same received network management information to both the working electronic device and the protection electronic device.

16. The system of claim 15, further comprising:
a display device,
wherein the processor is further configured to display on the display device representations of the working electronic device and the protection electronic device, and to receive the network management information as a user input responsive to a user selection of the representation of the working electronic device using the input device.

17. The system of claim 15 or claim 16, further comprising:
a memory storing objects associated with the working electronic device and the protection electronic device,
wherein the processor is configured to apply the network management information by applying the network management information to the objects associated with the working electronic device and the protection electronic device stored in the memory.

18. The system of claim 17, further comprising:
a transmitter; and
a receiver,
wherein the processor is configured to apply the network management information by generating a network management command based on the network management information and sending the network management command through the transmitter to a network element at which the protection group is implemented, to receive a confirmation from the network element that the network management command has been processed, and to apply the network management information to the objects responsive to the confirmation.

19. The system of claim 15 or claim 16, further comprising:
a display device,
wherein the processor is further configured to display on the display device representations of the working electronic device and the protection electronic device, the representations of the working electronic device and the protection electronic device providing indications of the network management information.

20. The system of claim 15 or claim 16, wherein the processor is configured to apply the network management information by generating respective network management commands for the working electronic device and the protection electronic device based on the network management information and sending the network management commands to a network element at which the protection group is implemented.

21. The system of claim 16, wherein the processor is further configured to modify the representations of the working electronic device and the protection electronic device to provide indications of the network management information.

22. The system of claim 15 or claim 16, wherein the processor is implemented at network equipment selected from the group consisting of: a network management system and a network element at which the protection group is implemented.

23. The system of any one of claims 15 to 22, wherein the network management information comprises configuration information for configuring the working electronic device.

24. The system of claim 15, further comprising:
a display device,
wherein the processor is further configured to display on the display device representations of the working electronic device and the protection electronic device, and to display active device network management information for only an active one of the working electronic device and the protection electronic device.

25. The system of claim 24, wherein the processor is further configured to detect an activity switch from the active one of the working electronic device and the protection electronic device to a newly active one of the working electronic device and the protection device, and to display the active device network management information for only the newly active one of the working electronic device and the protection electronic device responsive to detecting the activity switch.

26. The system of claim 25, further comprising:
a receiver,
wherein the processor is configured to detect the activity switch by receiving through the receiver an activity switch notification from a network element at which the protection group is implemented.

27. The system of claim 26, further comprising:
a transmitter,
wherein the processor is further configured to send an activity state query through the transmitter to a network element at which the protection group is implemented, and wherein the activity switch notification comprises a response to the activity state query.

28. The system of any one of claims 24 to 27, wherein the active device network management information comprises diagnostic configuration information indicating a configuration of the active electronic device for a diagnostic operation.

29. The system of any one of claims 24 to 28, wherein the processor implements a display controller and an activity switch detector.

30. A communication network comprising:
the system of any one of claims 15 to 29; and
a plurality of network elements implementing respective protection groups,
wherein the system is configured to manage the protection groups at the plurality of network elements.

31. A method of managing a communication network, comprising:
receiving network management information for an electronic device of a protection group, the protection group comprising a working electronic device and a protection electronic device in the communication network;
determining, after the network management information is received, to which one of the working electronic device and the protection electronic device the received network management information is to be applied, based on which one of the working electronic device and the protection electronic device is active; and
applying the received network management information to the active one of the working electronic device and the protection electronic device.

32. The method of claim 31, further comprising:
displaying representations of the working electronic device and the protection electronic device in a user interface,
wherein receiving comprises receiving the network management information as a user input responsive to a user selection of the representation of one of the working electronic device and the protection electronic device.

33. The method of any one of claims 31 to 33, further comprising:
displaying a representation of the protection group in a user interface,
wherein receiving comprises receiving the network management information as a user input responsive to a user selection of the representation of the protection group.

34. The method of claim 31, wherein applying comprises applying the network management information to an object associated with the active one of the working electronic device and the protection electronic device stored in a memory.

35. The method of claim 34, wherein objects associated with the working electronic device and the protection electronic device comprise an activity indication, and wherein determining comprises accessing the activity indication in at least one of the objects associated with the working electronic device and the protection electronic device.

36. The method of any one of claims 31 to 33, wherein applying comprises generating a network management command based on the network management information and sending the network management command to a network element at which the protection group is implemented.

37. The method of claim 32, further comprising:
modifying the representation of the active one of the working electronic device and the protection electronic device to provide an indication of the network management information.

38. The method of claim 31, further comprising:
displaying representations of the working electronic device and the protection electronic device in a user interface, the representation of the active one of the working electronic device and the protection electronic device providing an indication of the network management information.

39. The method of claim 38, further comprising:
detecting an activity switch between the active one of the working electronic device and the protection electronic device and a newly active one of the working electronic device and the protection electronic device; and
modifying the representations of the working electronic device and the protection electronic device to move the indication of the network management information to the newly active one of the working electronic device and the protection electronic device responsive to the detection.

40. A computer-readable medium comprising instructions which when executed perform the method of any one of claims 31 to 39.

41. A system for managing electronic devices in a communication network, comprising:
an input device for receiving network management information for an electronic device of a protection group, the protection group comprising a working electronic device and a protection electronic device in the communication network; and
a processor configured to receive the network management information from the input device, to determine, after the network management information is received, to which one of the working electronic device and the protection electronic device the received network management information is to be applied, based on which one of the working electronic device and the protection electronic device is active, and to apply the received network management information to the active one of the working electronic device and the protection electronic device.

42. The system of claim 41, further comprising:
a display device,
wherein the processor is further configured to display on the display device representations of the working electronic device and the protection electronic device, the representation of the active one of the working electronic device and the protection electronic device providing an indication of the network management information.

43. The system of claim 42, wherein the processor is further configured to detect an activity switch from the active one of the working electronic device and the protection electronic device to a newly active one of the working electronic device and the protection electronic device, and to modify the representations of the working electronic device and the protection electronic device to move the indication of the network management information to the newly active one of the working electronic device and the protection electronic device responsive to the detection.

44. The system of claim 43, further comprising:
a receiver,
wherein the processor is configured to detect the activity switch by receiving through the receiver an activity switch notification from a network element at which the working electronic device and the protection electronic device are implemented.

45. The system of claim 41, further comprising:
a display device,
wherein the processor is further configured to display on the display device representations of the working electronic device and the protection electronic device, to receive the network management information responsive to a user selection of the representation of one of the working electronic device and the protection electronic device, and to modify the representation of the active one of the working electronic device and the protection electronic device to provide an indication of the network management information.

46. The system of claim 41, further comprising:
a memory storing objects associated with the working electronic device and the protection electronic device, at least one of the objects associated with the working electronic device and the protection electronic device comprising an activity indication,
wherein the processor is configured to determine which of the working electronic device and the protection electronic device is active by accessing the activity indication in the at least one of the objects.

47. The system of claim 46, wherein the processor is configured to apply the network management information by applying the network management information to the object associated with the active one of the working electronic device and the protection electronic device stored in the memory.

48. The system of any one of claims 41 to 47, wherein the network management information comprises diagnostic information for configuring the active one of the working electronic device and the protection electronic device for a diagnostic operation of the protection group.

49. The system of any one of claims 41 to 48, wherein the protection group is a 1:N protection group comprising the protection electronic device and N working electronic devices including the working electronic device.

50. A communication network comprising:
a system according to any one of claims 41 to 49; and
a plurality of network elements implementing respective protection groups,
wherein the system is configured to manage the protection groups at the plurality of network elements.

51. A method of providing a network management system user interface, comprising:
displaying representations of a working electronic device and a protection electronic device of a protection group;
displaying available network management functions responsive to a user selection of the representation of the working electronic device; and
displaying an indication that network management functions are not available responsive to a user selection of the representation of the protection electronic device.

52. The method of claim 51, further comprising:
displaying active device network management information for only an active one of the working electronic device and the protection electronic device.

53. The method of claim 51, further comprising:
displaying network management information for each of the working electronic device and the protection electronic device.
